# EUROPEAN PATENT APPLICATION

(11) **EP 4 760 136 A1**
(43) Date of publication of application: **17.06.2026**
(21) Application number: 23948321.7
(22) Date of filing: 28.12.2023
(51) Int. Cl.: F16L 37/084, F16L 37/086, F16L 37/088, F16L 37/098, F16L 37/28, F16L 37/30, F16L 37/367, F16L 37/32, F16L 37/44, F16L 29/04, F16L 29/00

(54) **QUICK-PLUG FLUID CONNECTOR**

(30) Priority: 07.08.2023 CN 202322111466 U
(71) Applicant: Jiaxing Sheng Yang Electric Co., Ltd., Jiaxing, Zhejiang 314006 (CN)
(72) Inventor: XU, Xiaoyuan, Jiaxing, Zhejiang 314006 (CN); YU, Zhihua, Jiaxing, Zhejiang 314006 (CN); CUI, Fei, Jiaxing, Zhejiang 314006 (CN)
(74) Representative: Metida
(86) International application number: PCT/CN2023/142721
(87) International publication number: WO 2025/030760

(57) **Abstract**

Disclosed is a quick-connect/disconnect fluid connector, including: a first coupling body (10) with a first pipe body (11); and a second coupling body (20) with a second pipe body (21). An elastic locking body I (14) is arranged inside the first pipe body (11), a locking body II (23) is arranged on an outer wall of the second pipe body (21), and the locking body II (23) can pass through the locking body I (14) during the insertion of the second pipe body (21) into the first pipe body (11) and is reversely abutted against the locking body I (14), thereby achieving connection and fixation between the first coupling body (10) and the second coupling body (20). The connector features simple, convenient and quick connection and disconnection, and supports blind mating.

## Description

### Technical Field

The present invention relates to the technical field of connectors, in particular to a quick-connect/disconnect fluid connector.

### Background

A fluid connector is a device for connecting pipelines that transport high-pressure production fluids, so as to enable a relative movement between two components that carry the corresponding connecting ends of the pipelines. It can realize the quick connection or disconnection of liquid paths, and is a very important element in a liquid cooling heat dissipation system, which can ensure the quick connection and disconnection between various components in a liquid cooling system loop. Fluid connectors are widely used in liquid cooling systems for high heat dissipation electronic devices, such as liquid cooling heat dissipation systems for high-end manufacturing fields of medical treatment and aerospace as well as new energy batteries.

An example of the current fluid connector is a fluid connector as disclosed in CN217927715U, which is a slot-type liquid connector. When a male plug and a female plug are mated, a corresponding connect/disconnect direction is required, and convex points on the female plug need to be aligned with grooves on the male plug to achieve proper mating. Another example is a threaded connection leak-proof fluid connector disclosed in CN103672248A needs to be screwed down for connection by threaded rotation, which is troublesome to install and remove, thus being time-consuming and labor-consuming.

### Summary

In order to avoid the shortcomings of the prior art, the present invention provides a quick-connect/disconnect fluid connector, which achieves a blind mating effect, enables rapid connecting/disconnecting and disassembly, saves time and labor, and is convenient to operate.

The present invention adopts the following technical solutions to solve the technical problem: a quick-connect/disconnect fluid connector includes:
a first coupling body, including a first pipe body with a cavity distributed along the axial direction of the first pipe body, an abutting main body and a sliding main body being arranged inside the first pipe body, the abutting main body extending along the axial direction of the cavity, and the sliding main body being movable inside the cavity along the axial direction of the cavity; and
a second coupling body, including a second pipe body with a flow channel distributed along the axial direction of the second pipe body, one end of the second pipe body being inserted into the first pipe body, a linkage main body being arranged inside the second pipe body, and the abutting main body being capable of pushing the linkage main body to move axially along the flow channel, where
the first pipe body is internally provided with an accommodating cavity at the end where the second pipe body mates with the first pipe body, an elastic locking body I is arranged inside the accommodating cavity, a locking body II is arranged on an outer wall of the second pipe body, and the locking body II is capable of passing through the locking body I during the insertion of the second pipe body into the first pipe body and is reversely abutted against the locking body I, thereby achieving connection and fixation between the first coupling body and the second coupling body.

In several embodiments, an auxiliary pipe body is further arranged inside the cavity, one end of the auxiliary pipe body is abutted against the abutting main body, the other end of the auxiliary pipe body extends towards the accommodating cavity for formation of an outwardly expanded elastic arm at the end, a connecting groove is provided in the first pipe body, and the elastic arm is abutted against an interior of the connecting groove.

In several embodiments, the abutting main body includes a base plate and a push rod, the base plate abuts against an end portion of the first pipe body, one end of the push rod is connected to the base plate, and the other end of the push rod passes through the sliding main body.

In several embodiments, the sliding main body includes a sealing section and a guide section, and an outer diameter of the guide section is greater than that of the sealing section; and
the auxiliary pipe body includes a limiting section and a movable section, the sealing end is capable of being inserted into the limiting section and fitting with an inner wall of the limiting section, while the guide section fits with an inner wall of the movable section and is movable only within the movable section.

In several embodiments, an insertion pipe is arranged in communication with an end of the first pipe body that is away from the accommodating cavity, a plurality of openings are provided in the base plate, and the openings are in communication with the insertion pipe.

In several embodiments, a first spring is sleeved over the push rod, and the first spring is retained between the base plate and the sliding main body.

In several embodiments, an end cover is further arranged at an end portion of the second pipe body, a second spring is arranged between the end cover and the linkage main body, and the linkage main body is constrained from passing through to the outside of the second pipe body.

In several embodiments, the locking body I includes a base body with a through hole in the middle, where two positioning blocks are arranged on two opposite sides of the base body in a protruding manner, two positioning holes are provided at the end portion of the first pipe body, and the positioning holes are configured to accommodate the positioning blocks;
two clamping blocks are arranged on another two opposite sides of the base body in a protruding manner, the clamping blocks are abutted against an inner wall of the accommodating cavity, two limiting blocks are arranged inside the base body, and the positions of the limiting blocks correspond to those of the clamping blocks; and
the locking body II protrudes from and annularly arranged on an outer side of the second pipe body, and the locking body II is capable of unidirectionally passing through the limiting blocks and is reversely abutted against the limiting blocks.

In several embodiments, a stopper is arranged on the outer side of the second pipe body in a protruding manner, and the stopper is capable of abutting against the end portion of the first pipe body and restricting the second pipe body from continuing to move into the first pipe body.

In several embodiments, a plurality of assembly holes are reserved at one end of the second pipe body, the end cover is provided with a plurality of bumps, and the assembly holes are configured to accommodate the bumps.

The present invention has the following beneficial effects:
1. The present invention adopts a locking connect/disconnect connection structure to achieve a blind mating effect, making connecting and disconnecting simple, convenient and fast. A rigid abutment and guiding structure is adopted for internal parts during the product docking process, which avoids the misalignment of the internal parts caused by spring distortion when the first coupling body and the second coupling body are connected and disconnected.
2. The present invention improves an internal waterproof structure of the first coupling body, the auxiliary pipe body is fixed to the first coupling body in combination with the elastic arms, and sealing rings and the abutting main body are directly fixed inside the first coupling body, thus avoiding the problems of tilting and eccentricity of the abutting main body.
3. According to the present invention, two springs are adopted in each of the first coupling body and the second coupling body, so that huge instantaneous flow pulse and pressure pulse will not be generated in the process of insertion and separation of the first coupling body and the second coupling body under pressure, thus protecting the sealing rings, and further reducing the leakage of the fluid connector caused by the misoperation of connecting and disconnecting when the system pressure is not relieved. Furthermore, a lateral sealing structure is realized, and even if the first coupling body and the second coupling body are in a disconnected state, they can also achieve bidirectional sealing independently.
4. The present invention optimizes the connect/disconnect structure of the product, lowers the manufacturing cost, reduces the processing and assembling time, and greatly improves the production efficiency.

### Brief Description of Figures

The accompanying drawings described herein are for illustrative purposes only of selected embodiments and are not representative of all possible embodiments, and should not be construed as limiting the scope of the present invention.
FIG. 1 schematically shows an overall structure of a quick-connect/disconnect fluid connector provided in Embodiment 1;
FIG. 2 schematically shows an enlarged structure of a first coupling body in FIG. 1;
FIG. 3 schematically shows a cross-sectional structure of FIG. 2;
FIG. 4 schematically shows an exploded structure of FIG. 2;
FIG. 5 schematically shows a mating structure of an abutting main body and a sliding main body in FIG. 2;
FIG. 6 schematically shows an enlarged structure of the second coupling body in FIG. 1;
FIG. 7 schematically shows a cross-sectional structure of FIG. 6;
FIG. 8 schematically shows a matching structure of a linkage main body combined with an end cover in FIG. 7; and
FIG. 9 schematically shows a cross-sectional structure of FIG. 1.

### Detailed Description

Embodiments of the present invention will be described in detail below. In order to make the objects, technical solutions and advantages of the embodiments of the present invention clearer, the technical solutions in the embodiments of the present invention will be clearly and completely described below in conjunction with the embodiments of the present invention, and it is apparent that the described embodiments are parts of embodiments rather than all embodiments of the present invention.

Accordingly, the detailed descriptions of the embodiments of the present invention provided below are not intended to limit the scope of the claimed present invention, but merely represent selected embodiments of the present invention. All other embodiments obtained by those of ordinary skill in the art based on the embodiments of the present invention without creative efforts shall fall within the protection scope of the present invention.

The terminology used herein is intended to explain the embodiments and is not intended to limit and/or define the present invention.

For example, expressions such as "in a certain direction", "along a certain direction", "parallel", "orthogonal", "central", "opposite", "front, back, left, and right" that represent relative or absolute configurations not only indicate such configurations in a strict sense, but also indicate states of relative displacement with tolerances, or with angles or distances at which the same degree of function can be obtained.

### Embodiment 1

The present invention provides a quick-connect/disconnect fluid connector, which achieves a blind mating effect, enables rapid connecting/disconnecting and disassembly, saves time and labor, and is convenient to operate.

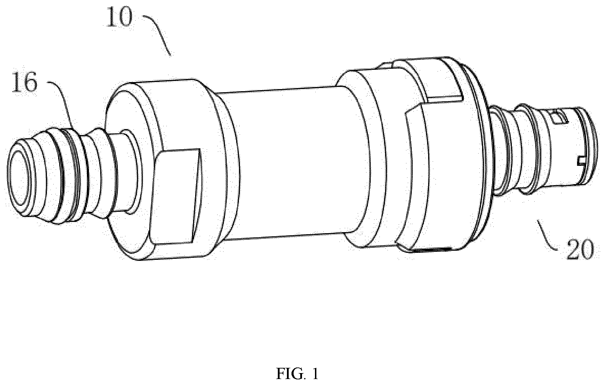

As shown in FIG. 1, the quick-connect/disconnect fluid connector is mainly composed of a first coupling body 10 and a second coupling body 20 that are mated with each other, forming a socket and plug structure. When the first coupling body and the second coupling body are used independently, they are both closed internally; and after they are mated for insertion, conduction is achieved therebetween.

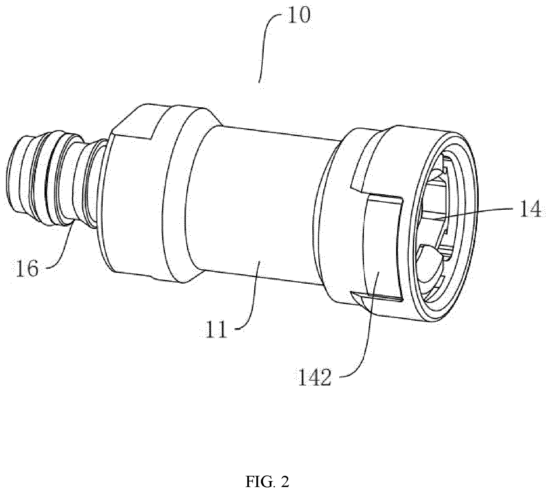

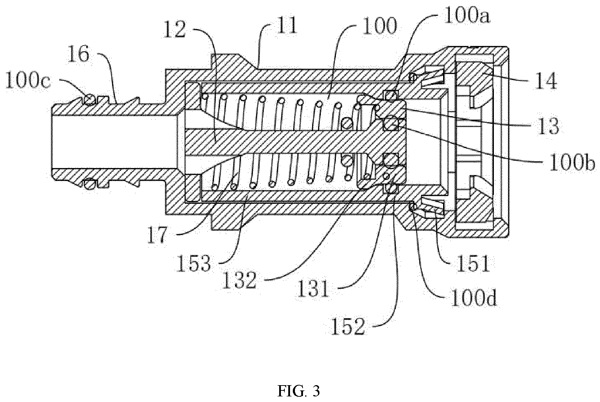

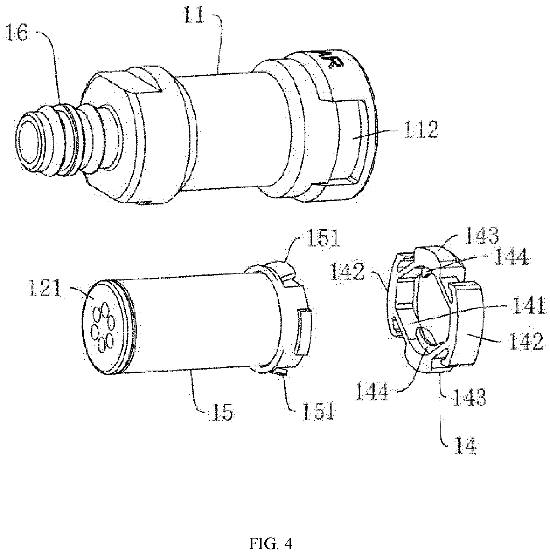

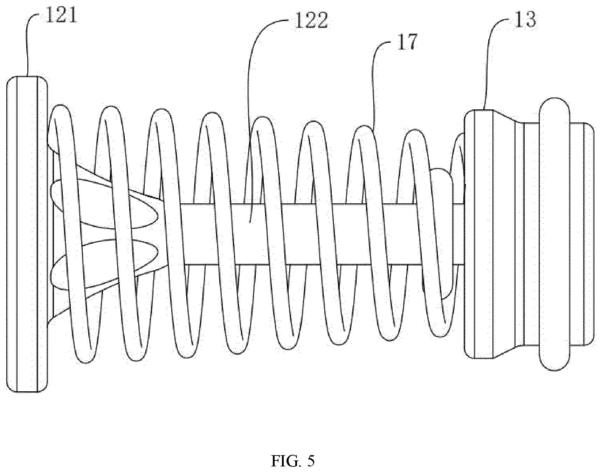

As shown in FIG. 2 to FIG. 5, the first coupling body 10 includes a first pipe body 11 with a cavity 100 distributed along the axial direction of the first pipe body, an abutting main body 12 and a sliding main body 13 are arranged inside the first pipe body 11, the abutting main body 12 extends along the axial direction of the cavity 100, and the sliding main body 13 is movable inside the cavity 100 along the axial direction of the cavity. An auxiliary pipe body 15 is further arranged inside the cavity 100, one end of the auxiliary pipe body 15 is abutted against the abutting main body 12, the other end of the auxiliary pipe body 15 extends towards an accommodating cavity 101 for formation of an outwardly expanded elastic arm 151 at the end, a connecting groove 111 is provided in the first pipe body 11, the elastic arms 151 is abutted against an interior of the connecting groove 111, and sealing rings IV 100d are filled between the elastic arm and the connecting groove.

Moreover, the first pipe body 11 is internally provided with the accommodating cavity 101 at the end where a second pipe body 21 mates with the first pipe body. An elastic locking body I 14, made of a material such as rubber, is arranged inside the accommodating cavity 101. The locking body I 14 includes a base body 141 with a through hole in the middle, two positioning blocks 142 are arranged on two opposite sides of the base body 141 in a protruding manner, two positioning holes 112 are provided at an end portion of the first pipe body 11, and the positioning holes 112 are configured to accommodate the positioning blocks 142. Two clamping blocks 143 are arranged on another two opposite sides of the base body 141 in a protruding manner, the clamping blocks 143 are abutted against an inner wall of the accommodating cavity 101, two limiting blocks 144 are arranged inside the base body 141, and the positions of the limiting blocks 144 correspond to those of the clamping blocks 143.

The abutting main body 12 includes a base plate 121 and a push rod 122, the base plate 121 abuts against an end portion of the first pipe body 11, one end of the push rod 122 is connected to the base plate 121, and the other end of the push rod 122 passes through the sliding main body 13.

The sliding main body 13 includes a sealing section 131 and a guide section 132, and an outer diameter of the guide section 132 is greater than that of the sealing section 131. The auxiliary pipe body 15 includes a limiting section 152 and a movable section 153, the sealing end is capable of being inserted into the limiting section 152 and fitting with an inner wall of the limiting section 152, while the guide section 132 fits with an inner wall of the movable section 153 and is movable only within the movable section 153. When the sliding main body 13 is within the limiting section 152, it seals the first pipe body 11.

A sealing ring I 100a is embedded in the limiting section 152, and a sealing ring II 100b is embedded in an end portion of the push rod 122.

An insertion pipe 16 is arranged in communication with an end of the first pipe body 11 that is away from the accommodating cavity 101, and a sealing ring III 100c is sleeved over the insertion pipe 16. A plurality of openings are provided in the base plate 121, and the openings are in communication with the insertion pipe 16. Furthermore, a first spring 17 is sleeved over the push rod 122, and the first spring 17 is retained between the base plate 121 and the sliding main body 13.

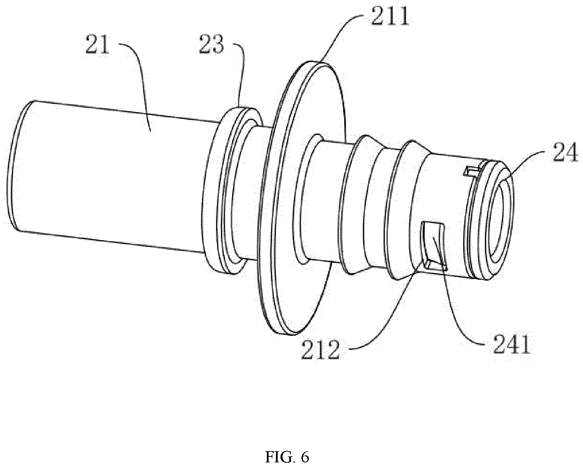

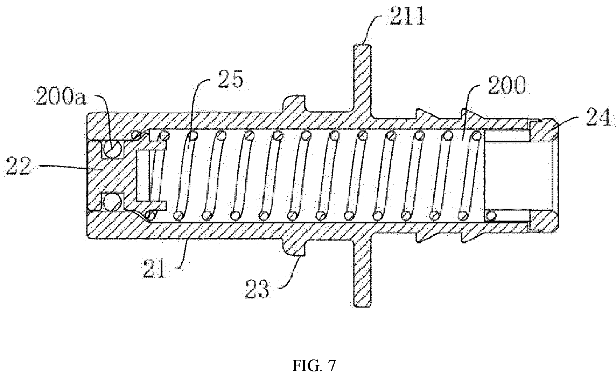

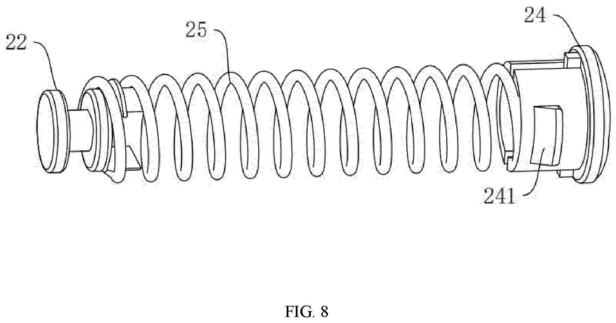

As shown in FIG. 6 to FIG. 8, the second coupling body 20 includes the second pipe body 21 with a flow channel 200 distributed along the axial direction of the second pipe body, one end of the second pipe body 21 is inserted into the first pipe body 11, a linkage main body 22 is arranged inside the second pipe body 21, a sealing ring V 200a is embedded in the linkage main body 22, the linkage main body 22 seals the second pipe body 21 when being located at an end portion thereof, and the abutting main body 12 is capable of pushing the linkage main body 22 to move axially along the flow channel 200.

A locking body II 23 is arranged on an outer wall of the second pipe body 21, and the locking body II 23 is capable of passing through the locking body I 14 during the insertion of the second pipe body 21 into the first pipe body 11 and is reversely abutted against the locking body I 14, thereby achieving connection and fixation between the first coupling body 10 and the second coupling body 20. Specifically, the locking body II 23 protrudes from and annularly arranged on an outer side of the second pipe body 21, and the locking body II 23 is capable of unidirectionally passing through the limiting blocks 144 and is reversely abutted against the limiting blocks 144.

Furthermore, an end cover 24 is further arranged at the end portion of the second pipe body 21, a second spring 25 is arranged between the end cover 24 and the linkage main body 22, and the linkage main body 22 is constrained from passing through to the outside of the second pipe body 21. A plurality of assembly holes 212 are reserved at one end of the second pipe body 21, the end cover 24 is provided with a plurality of bumps 241, and the assembly holes 212 are configured to accommodate the bumps 241 for quick insertion and fixation.

Furthermore, a disc-shaped stopper 211 is arranged on the outer side of the second pipe body 21 in a protruding manner, and the stopper 211 is capable of abutting against the end portion of the first pipe body 11 and restricting the second pipe body 21 from continuing to move into the first pipe body 11.

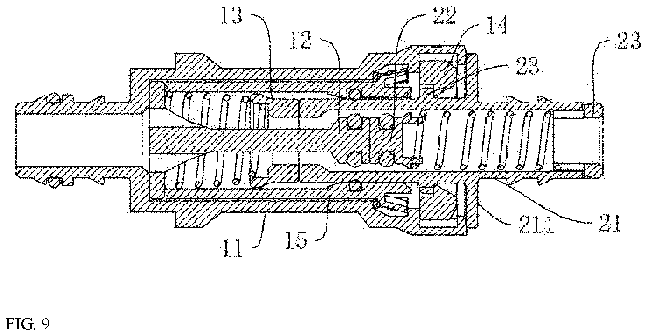

As shown in FIG. 9, when the present invention is in use, a left end of the second coupling body 20 is inserted into an opening formed at a right end of the first coupling body 10, and the second pipe body 21 is enabled to continue to advance leftward, overcoming the spring force and pushing the sliding main body 13 into the movable section 153. At the same time, the abutting main body 12 pushes the linkage main body 22 in the second pipe body 21 to overcome the spring force and move rightward until the stopper 211 in the second pipe body 21 abuts against the end portion of the first pipe body 11, and the locking body II 23 has passed through the limiting blocks 144 at this time. After being released, under the acting force of the springs, the locking body II 23 is automatically buckled on the limiting blocks 144 in the reverse direction to achieve connection and fixation between the first coupling body and the second coupling body, so that conduction is achieved therebetween.

The present invention describes preferred embodiments, including the best mode known to the inventors for carrying out the present invention. Of course, variations from these preferred embodiments will be apparent to those skilled in the art. It is envisioned by the inventors that such variations may be used as appropriate by those skilled in the art, and the inventors point out that the present invention may be practiced otherwise than as specifically described herein. Accordingly, the present invention includes all modifications encompassed by the spirit and scope of the present invention as defined by the appended claims. Moreover, unless otherwise stated or clearly contradicted by the content, the present invention includes any of the above factors and all possible variations thereof.

## Claims

1. A quick-connect/disconnect fluid connector, **characterized by** comprising:
a first coupling body, comprising a first pipe body with a cavity distributed along the axial direction of the first pipe body, an abutting main body and a sliding main body being arranged inside the first pipe body, the abutting main body extending along the axial direction of the cavity, and the sliding main body being movable inside the cavity along the axial direction of the cavity; and
a second coupling body, comprising a second pipe body with a flow channel distributed along the axial direction of the second pipe body, one end of the second pipe body being inserted into the first pipe body, a linkage main body being arranged inside the second pipe body, and the abutting main body being capable of pushing the linkage main body to move axially along the flow channel, wherein
the first pipe body is internally provided with an accommodating cavity at the end where the second pipe body mates with the first pipe body, an elastic locking body I is arranged inside the accommodating cavity, a locking body II is arranged on an outer wall of the second pipe body, and the locking body II is capable of passing through the locking body I during the insertion of the second pipe body into the first pipe body and is reversely abutted against the locking body I, thereby achieving connection and fixation between the first coupling body and the second coupling body.

2. The quick-connect/disconnect fluid connector according to claim 1, **characterized in that** an auxiliary pipe body is further arranged inside the cavity, one end of the auxiliary pipe body is abutted against the abutting main body, the other end of the auxiliary pipe body extends towards the accommodating cavity for formation of an outwardly expanded elastic arm at the end, a connecting groove is provided in the first pipe body, and the elastic arm is abutted against an interior of the connecting groove.

3. The quick-connect/disconnect fluid connector according to claim 2, **characterized in that** the abutting main body comprises a base plate and a push rod, the base plate abuts against an end portion of the first pipe body, one end of the push rod is connected to the base plate, and the other end of the push rod passes through the sliding main body.

4. The quick-connect/disconnect fluid connector according to claim 3, **characterized in that** the sliding main body comprises a sealing section and a guide section, and an outer diameter of the guide section is greater than that of the sealing section; and
the auxiliary pipe body comprises a limiting section and a movable section, the sealing end is capable of being inserted into the limiting section and fitting with an inner wall of the limiting section, while the guide section fits with an inner wall of the movable section and is movable only within the movable section.

5. The quick-connect/disconnect fluid connector according to claim 3, **characterized in that** an insertion pipe is arranged in communication with an end of the first pipe body that is away from the accommodating cavity, a plurality of openings are provided in the base plate, and the openings are in communication with the insertion pipe.

6. The quick-connect/disconnect fluid connector according to claim 4, **characterized in that** a first spring is sleeved over the push rod, and the first spring is retained between the base plate and the sliding main body.

7. The quick-connect/disconnect fluid connector according to claim 6, **characterized in that** an end cover is further arranged at an end portion of the second pipe body, a second spring is arranged between the end cover and the linkage main body, and the linkage main body is constrained from passing through to the outside of the second pipe body.

8. The quick-connect/disconnect fluid connector according to claim 7, **characterized in that** the locking body I comprises a base body with a through hole in the middle, wherein two positioning blocks are arranged on two opposite sides of the base body in a protruding manner, two positioning holes are provided at the end portion of the first pipe body, and the positioning holes are configured to accommodate the positioning blocks;
two clamping blocks are arranged on another two opposite sides of the base body in a protruding manner, the clamping blocks are abutted against an inner wall of the accommodating cavity, two limiting blocks are arranged inside the base body, and the positions of the limiting blocks correspond to those of the clamping blocks; and
the locking body II protrudes from and annularly arranged on an outer side of the second pipe body, and the locking body II is capable of unidirectionally passing through the limiting blocks and is reversely abutted against the limiting blocks.

9. The quick-connect/disconnect fluid connector according to claim 8, **characterized in that** a stopper is arranged on the outer side of the second pipe body in a protruding manner, and the stopper is capable of abutting against the end portion of the first pipe body and restricting the second pipe body from continuing to move into the first pipe body.

10. The quick-connect/disconnect fluid connector according to claim 9, wherein a plurality of assembly holes are reserved at one end of the second pipe body, the end cover is provided with a plurality of bumps, and the assembly holes are configured to accommodate the bumps.
